Europäisches Patentamt

European Patent Office

Office européen des brevets

(19)

(11) Veröffentlichungsnummer: **0 140 031**

**A2**

(12) # EUROPÄISCHE PATENTANMELDUNG

(21) Anmeldenummer: **84110416.9**

(22) Anmeldetag: **01.09.84**

(51) Int. Cl.⁴: **B 03 B 5/48**
**B 01 D 21/00**

(30) Priorität: **06.09.83 DE 3332088**

(43) Veröffentlichungstag der Anmeldung:
**08.05.85 Patentblatt 85/19**

(84) Benannte Vertragsstaaten:
**AT DE FR GB NL**

(71) Anmelder: **STIMA Apparatebau GMBH**
**Porschestrasse 10**
**D-3300 Braunschweig(DE)**

(72) Erfinder: **Wollschläger, Dieter**
**Hansestrasse 32a**
**D-3300 Branschweig(DE)**

(74) Vertreter: **Gralfs, Harro, Dipl.-Ing.**
**Am Bürgerpark 8**
**D-3300 Braunschweig(DE)**

(54) Entwässerungsvorrichtung für teilchenförmige Feststoffe mit einem in einen Wasserkasten entauchenden Schöpfrad.

(57) Entwässerungsvorrichtung für teilchenförmige Feststoffe mit einem in einen Wasserkasten (4) eintauchenden Schöpfrad (12) mit auf dem Umfang verteilten Schöpfbechern, bei dem im Wasserkasten quer zum Schöpfrad verlaufende Wasserüberlaufrinnen (22) mit horizontal liegenden Überlaufkanten (34) angeordnet sind, die mit ihren vom Schöpfrad abgewandten Enden in an den Seiten des Wasserkastens angeordnete Sammelrinnen (6) einmünden, wobei die Wasserüberlaufrinnen nach den Sammelrinnen zu in der Tiefe zunehmen. An der Unterseite (24) der Wasserüberlaufrinnen (22) ist wenigstens ein sich in Längsrichtung erstreckendes Blech (30) angeordnet, das sich von der Unterseite der Überlaufrinne nach unten erstreckt. In der Wasserüberlaufrinne (22) kann wenigstens im Bereich des stromabwärtigen Endes ein querliegendes Überlaufwehr (40) angeordnet sein, das sich über eine begrenzte Höhe vom Boden der Wasserüberlaufrinne nach oben erstreckt, wobei stromauf dieses Überlaufwehrs im Boden (24) der Wasserüberlaufrinne eine Öffnung (44) vorgesehen ist.

FIG. 3

Entwässerungsvorrichtung für teilchenförmige Feststoffe mit einem
in einen Wasserkasten eintauchenden Schöpfrad

ANWENDUNGSGEBIET DER ERFINDUNG

Die Erfindung bezieht sich auf eine Entwässerungsvorrichtung für
teilchenförmige Feststoffe mit einem in einen Wasserkasten eintauchenden Schöpfrad mit auf dem Umfang verteilten Schöpfbechern.
bei dem im Wasserkasten quer zum Schöpfrad verlaufende Wasserüberlaufrinnen mit horizontal liegenden Überlaufkanten angeordnet
sind, die mit ihren vom Schöpfrad abgewandten Enden in an den
Seiten des Wasserkastens angeordnete Sammelrinnen einmünden,
wobei die Wasserüberlaufrinnen nach den Sammelrinnen zu in der
Tiefe zunehmen.

BESCHREIBUNG DES STANDES DER TECHNIK

Bei einer bekannten Entwässerungsvorrichtung der gattungsgemäßen
Art (DE-AS 12 61 093) wird ein Gemisch von Wasser mit Sand oder
Kies in den Wasserkasten der Entwässerungsvorrichtung aufgegeben,
beispielsweise durch einen Saugbagger oder dergleichen. Im Wasser
kasten setzen sich die Feststoffe ab und das weitgehend geklärte
Wasser läuft in geringer Schichthöhe über die Oberkanten der
Überlaufrinnen in diese hinein. Auf diese Weise wird auch eine
weitgehende Abscheidung von Feinstoffen erzielt.

Die durch die Wasserüberlaufrinnen angestrebte Feststoffabscheidung und Beruhigung des Wasserablaufes wird dadurch beeinträchtigt, daß das Schöpfrad mit Schöpfbechern und Einbauten versehen
ist, durch die Wellenbewegungen erzeugt werden. Es kommt ferner
im Betrieb zu einem Abfallen von Feststoffen in den Wasserkasten,
beispielsweise von Feststoffen, die in den Schöpfbechern zurückgeblieben sind und vor dem Eintauchen der Schöpfbecher in den
Wasserkasten abfallen können. Auch hierdurch werden die angestrebte Arbeitsweise beeinträchtigende Wellen erzeugt.

ZUSAMMENFASSUNG DER ERFINDUNG

Aufgabe der Erfindung ist es, eine Entwässerungsvorrichtung der gattungsgemäßen Art so weiterzuentwickeln, daß eine verbesserte Feinstoffabscheidung erreicht wird.

Diese Aufgabe wird gemäß der Erfindung dadurch gelöst, daß an der Unterseite der Wasserüberlaufrinnen wenigstens ein sich in deren Längsrichtung erstreckendes Blech angeordnet ist, das sich von der Unterseite der Überlaufrinne nach unten erstreckt.

Zweckmäßige Ausgestaltungen und Weiterentwicklungen der Erfindung sind Gegenstand der Unteransprüche.

KURZE BESCHREIBUNG DER ZEICHNUNG

Die Erfindung ist in der Zeichnung beispielsweise veranschaulicht und im nachstehenden im einzelnen anhand der Zeichnung beschrieben.In dieser zeigt:

Fig. 1      eine Seitenansicht eines Entwässerungsschöpfrades mit
            einem Ausschnitt in der Seitenwand des Wasserkastens
            längs der Linie I-I in Fig. 2.

Fig 2.      eine Ansicht des Entwässerungsschöpfrades nach Fig. 1
            von links gesehen mit der Wiedergabe der rechten Hälfte
            mit einem Teilschnitt längs der Linie II-II in Fig. 1

Fig. 3      eine Seitenansicht einer Wasserüberlaufrinne gemäß der
            Erfindung.

Fig. 4      eine Draufsicht auf die Wasserüberlaufrinne.

Fig 5       eine Endansicht der Wasserüberlaufrinne, und zwar in

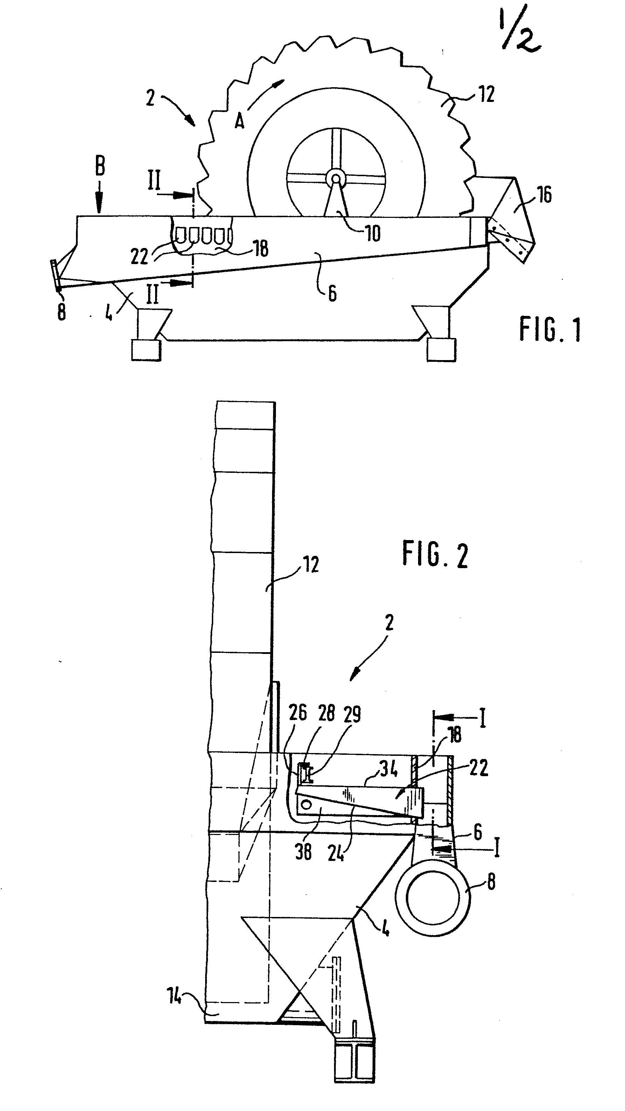

            Fig. 1 von links gesehen.

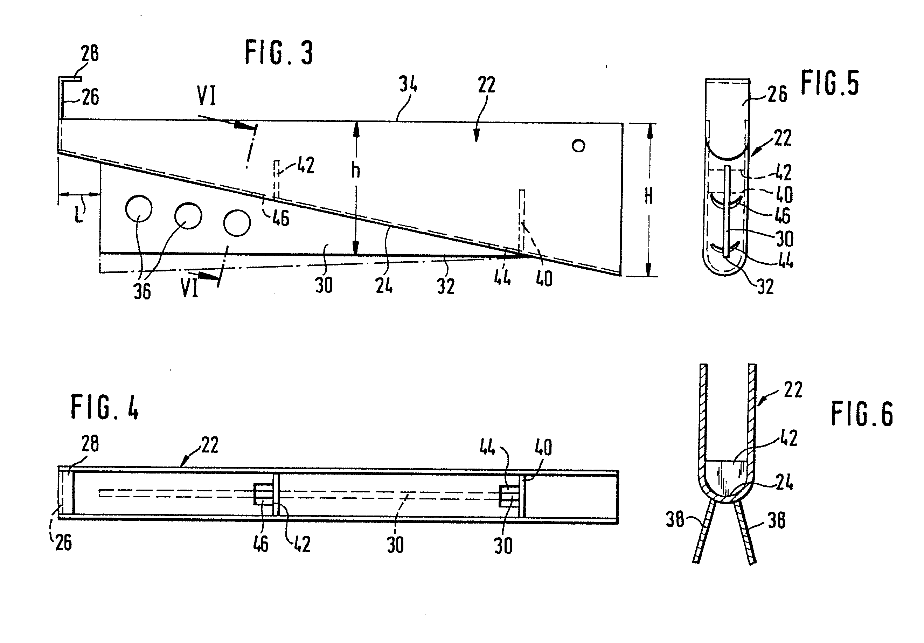

Fig. 6      eine weitere Ausführungsform im Schnitt längs der Linie
            IV-IV.

BESCHREIBUNG BEVORZUGTER AUSFÜHRUNGSFORMEN **0140031**

Das in Fig. 1 und 2 dargestellte Entwässerungsschöpfrad 2 weist einen Wasserkasten 4 auf, der auf beiden Seiten außen mit Sammelrinnen 6 für das Wasser versehen ist, die in einem Auslauf 8 münden. Auf in der Zeichnung nicht dargestellten Trägern, die sich in Längsrichtung des Wasserkastens 4 erstrecken, ist auf in Fig. 1 schematisch dargestellten Lagerböcken 10 das Schöpfrad 12 drehbar gelagert. das mit einem Drehantrieb versehen ist, der in der Zeichnung gleichfalls nicht dargestellt ist. Das Schöpfrad läuft in Richtung des Pfeiles A um und ist so angeordnet, daß es in den Wasserkasten 4 bis kurz über den Boden 14 des Wasserkasten 4 eintaucht, wie aus Fig. 2 ersichtlich. Das Entwässerungsschöpfrad 12 ist in üblicher Weise mit Schöpftaschen versehen, mit denen Feststoffe aus dem Wasserkasten aufgenommen werden. Diese Schöpftaschen sind mit Siebböden versehen, durch die während des Umlaufes das Wasser abströmen kann. Die entwässerten Feststoffe werden dann auf eine Rutsche 16 abgeworfen, über die sie auf ein Förderband oder dergl. gelangen. Das Gemisch aus Feststoff und Wasser kann beispielsweise in Richtung des Pfeiles B links vom Schöpfrad 12 von oben in den Wasserkasten eingeführt werden. Der Wasserkasten kann aber auch mit Zuflußrohren versehen sein, über die das Gemisch unterhalb der Wasseroberfläche in den Wasserkasten hinein gepumpt wird.

In den Bereichen beidseitig des Schöpfrades 12 sind im Wasserkasten Wasserüberlaufrinnen 22 angeordnet, die im Querschnitt im wesentlichen U-förmig sind und einen geneigten Boden 24 aufweisen. Die Wasserüberlaufrinnen sind an dem Ende, an dem sie die geringste Höhe haben, das ist in Fig 2 und 4 am linken Ende, durch ein Blech 26 verschlossen, das am oberen Ende abgewinkelt ist. Mit dieser Abwinkelung 28 wird die Wasserüberlaufrinne 22 in eine Halterung 29 eingehängt, die hier als I-Profil dargestellt ist,das sich im Bereich des Schöpfrades 12 parallel zu diesem in Längsrichtung durch den Wasserkasten 4 erstreckt.

Die Trennwand 18 zwischen dem Wasserkasten 4 und der Sammelrinne 6 ist mit Ausschnitten entsprechend dem Profil der Wasserüberlauf_ rinne 22 an deren offenen Ende, in der Zeichnung am rechten Ende, versehen. Mit dem offenen Ende ist die Wasserüberlaufrinne jeweils in den zugehörigen Ausschnitt in der Trennwand 18 eingehängt, wobei vorzugsweise eine Gummidichtung vorgesehen ist, die
in der Zeichnung nicht dargestellt ist.

Die Wasserüberlaufrinnen 22 sind so angeordnet, daß die Oberkanten aller Wasserüberlaufrinnen in einer horizontalen Ebene
liegen. Diese Oberkanten bestimmen den Wasserspiegel im Wasserkasten 4. Über sie läuft das Wasser aus dem Wasserkasten in die
Wasserüberlaufrinnen und von dort in die Sammelrinne 6.

Die Abscheidung von Feinstoffen aus dem Feststoff-Wassergemisch
hängt davon ab, daß das Wasser im Bereich des Überlaufes in die
Wassersammelrinnen möglichst ruhig ist. Je ruhiger das Wasser in
diesem Bereich ist, um so feiner sind die Feststoffe, die im
Wasserkasten  aus dem Feststoff-Wassergemisch abgeschieden
werden.

Zur Erzielung einer verbesserten Wasserberuhigung ist an der
Unterseite des Bodens 24 der Wasserüberlaufrinne 22 ein schwertartiges Blech 30 angeschweißt, dessen untere Kante 32 im wesentlichen parallel zur Oberkante 34 der Wasserüberlaufrinne 22
liegt. Die Gesamthöhe h zwischen der Unterkante des Bleches 30
und der Oberkante 34 der Wasserüberlaufrinne 22 ist bei dem dargestellten Ausführungsbeispiel kleiner als die Gesamthöhe H der
Wasserüberlaufrinne an deren Auslaufende. Das Blech 30 endet in
einem Abstand von dem Bereich der Wasserüberlaufrinne 22, auf der
im Bereich des Auslaufs eine Gummidichtung aufgesetzt ist bzw.mit
dem die Wasserüberlaufrinne in die zugehörige Öffnung in der
Seitenwand der Sammelrinne eingehängt ist.Am linken, dem stromauf
wärtigen Ende der Wasserüberlaufrinne, endet das Blech 30 im
Abstand von der Endwand 26. Dieser Abstand L ist im allgemeinen
konstruktionsbedingt. Die Gesamthöhe h, gemessen von der Unterkante 32 des Bleches 30, kann auch größer, und zwar auch größer
als H gewählt werden, wobei dann auch am rechten Ende das Blech mit einer Endkante erscheint. Diese Höhe richtet sich nach der jeweils gewünschten Beruhigungswirkung, die durch das schwertartige Blech 30 im Wasser erzielt werden soll. Die Unterkante des Bleches 30 braucht nicht parallel zur Oberkante verlaufen, sondern kann beispielsweise auch zum stromaufwärtigen Ende der Wasserüberlaufrinne 22 hin abfallen, wie in Fig. 3 gestrichelt dargestellt ist. Es ist weiter möglich, die Höhe der schwertartigen Bleche an den einzelnen Wasserüberlaufrinnen 22 über die Länge des Wasserkastens zu variieren entsprechend den Turbulenzen, die an den jeweiligen Stellen auftreten.

Zur Dämpfung einer Querströmung können die unter die Wasserüberlaufrinne angebrachten Bleche 30 weiter mit Durchbrüchen 36 versehen werden, wie sie in Fig. 3 an den stromaufwärtigen Bereich der Wasserüberlaufrinne angrenzend dargestellt sind. Durch diese Löcher wird eine Querströmung gedrosselt und so gedämpft.

Bei der Ausführungsform nach den Fig. 3 bis 5 ist ein einziges Blech 30 vorgesehen. Wie in Fig. 6 dargestellt, können aber auch zwei Bleche 38 derartig angeordnet werden, daß sie vom Boden 24 der Wasserüberlaufrinne 22 ausgehend gespreizt sind. Auch diese Bleche können mit Durchbrüchen versehen sein. Mit derartigen gespreizten Blechen lassen sich zusätzlich aufsteigende Strömungen beruhigen. Derartige Wasserüberlaufrinnen werden daher zweckmäßig in den Bereichen vorgesehen,in denen solche aufsteigenden Strömungen auftreten.

Durch die unter den Wasserüberlaufrinnen angeordneten Bleche wird, wie erwähnt, die Strömung beruhigt. Dadurch kommt es zu einer verbesserten Feinstoffabscheidung. Feinstoff, der trotzdem noch in die Wasserüberlaufrinnen gelangt, kann durch quer in den Wasserüberlaufrinnen angeordnete Wehrbleche 40, 42 in der Rinne zum Absetzen gebracht werden. Vor diesen Wehrblechen bilden sich Totwasserbereiche, in denen es zu einem Absetzen des Feinstoffes kommt. Der abgesetzte Feinstoff kann durch Öffnungen 44, 46 im Boden der Rinne, die stromauf der Wehrbleche 40, 42 angeordnet sind, in den Wasserkasten absinken. Die Länge dieser Bodenöffnungen und auch die Zahl, Höhe und Lage der Wehrbleche wird entsprechend den Bedürfnissen gewählt.

Ansprüche

1. Entwässerungsvorrichtung für teilchenförmige Feststoffe mit einem in einen Wasserkasten (4) eintauchenden Schöpfrad (12) mit auf dem Umfang verteilten Schöpfbechern, bei dem im Wasserkasten quer zum Schöpfrad verlaufende Wasserüberlaufrinnen (22) mit horizontal liegenden Überlaufkanten (34) angeordnet sind, die mit ihren vom Schöpfrad abgewandten Enden in an den Seiten des Wasserkastens angeordnete Sammelrinnen (6) einmünden, wobei die Wasserüberlaufrinnen nach den Sammelrinnen zu in der Tiefe zunehmen, dadurch gekennzeichnet,daß an der Unterseite (24) der Wasserüberlaufrinnen(22) wenigstens ein sich in Längsrichtung erstreckendes Blech (30) angeordnet ist, das sich von der Unterseite der Überlaufrinne nach unten erstreckt.

2. Entwässerungsvorrichtung nach Anspruch 1, dadurch gekennzeichnet, daß sich die Bleche (30) über die Länge der Wasserüberlaufrinne erstrecken, die bei eingebauter Wasserüberlaufrinne freiliegt.

3. Entwässerungsvorrichtung nach Anspruch 1 oder 2, dadurch gekennzeichnet, daß das Blech (30) eine im wesentlichen zur Oberkante (34) der Wasserüberlaufrinne (22) parallele untere Kante (32) aufweist.

4. Entwässerungsvorrichtung nach Anspruch 1,2 oder 3, dadurch gekennzeichnet, daß sich das Blech (30) bis auf die Höhe (h) der Rinne (22) im Bereich der Auflage in den inneren Seitenwänden der Sammelrinnen erstreckt.

5. Entwässerungsvorrichtung nach Anspruch 1,2,3 oder 4, <u>dadurch gekennzeichnet</u>, daß zwei Bleche (38) angeordnet sind, die im Querschnitt vom Boden (24) der Wasserüberlaufrinne (22) aus nach außen gespreizt sind.

6. Entwässerungsvorrichtung nach Anspruch 1, 2, 3, 4 oder 5, <u>dadurch gekennzeichnet</u>, daß die Bleche (30,38) mit Löchern (36) versehen sind.

7. Entwässerungsvorrichtung nach Anspruch 1, 2, 3, 4, 5 oder 6, <u>dadurch gekennzeichnet</u>, daß in der Wasserüberlaufrinne (22) wenigstens im Bereich des stromabwärtigen Endes ein querliegendes Überlaufwehr (40) angeordnet ist, das sich über eine begrenzte Höhe vom Boden der Wasserüberlaufrinne nach oben erstreckt, und daß stromauf dieses Überlaufwehrs im Boden (24) der Wasserüberlaufrinne eine Öffnung (44) vorgesehen ist.

0140031
1/2

FIG. 1

FIG. 2

FIG. 3

FIG.5

FIG. 4

FIG.6

2/2

0140031